# EUROPÄISCHE PATENTSCHRIFT

(11) **EP 3 930 059 B1**
(45) Veröffentlichungstag und Bekanntmachung des Hinweises auf die Patenterteilung: **24.09.2025**
(21) Anmeldenummer: 21191131.8
(22) Anmeldetag: 12.10.2017
(51) Int. Cl.: C22B 1/00, C22B 7/00, H01M 6/52, H01M 10/54

(54) **RECYCLING-VERFAHREN ZUM BEHANDELN GEBRAUCHTER BATTERIEN, INSBESONDERE WIEDER AUFLADBARER BATTERIEN UND BATTERIE-VERARBEITUNGSANLAGE**
RECYCLING METHOD FOR TREATING USED BATTERIES, IN PARTICULAR RECHARGEABLE BATTERIES AND BATTERY PROCESSING INSTALLATION
PROCÉDÉ DE RECYCLAGE DESTINÉ À TRAITER LES BATTERIES USAGÉES, EN PARTICULIER LES BATTERIES RECHARGEABLES ET INSTALLATION DE TRAITEMENT DE BATTERIES

(30) Priorität: 20.10.2016 DE 102016120046
(43) Veröffentlichungstag der Anmeldung: 29.12.2021
(62) Teilanmeldung aus: 17791310.0
(73) Patentinhaber: Duesenfeld GmbH, 38176 Wendeburg (DE)
(72) Erfinder: HANISCH, Christian, 38118 Braunschweig (DE)
(74) Vertreter: Gramm, Lins & Partner Patent- und Rechtsanwälte PartGmbB

(56) Entgegenhaltungen:
- WO-A1-2010/102377
- WO-A1-2016/174156
- DE-A1- 102011 110 083
- DE-A1- 102012 024 876

## Beschreibung

Die Erfindung betrifft ein Verfahren zum Behandeln gebrauchter Batterien, insbesondere gebrauchter Lithium-Batterien, beispielsweise Lithium-Ionen-Batterien.

Gemäß einem zweiten Aspekt betrifft die Erfindung eine Batterie-Verarbeitungsanlage zum Behandeln gebrauchter Batterien, insbesondere zum Behandeln gebrauchter Lithium-Batterien, gemäß dem Oberbegriff von Anspruch 8.

Aus der US 2005/0241943 A1 ist ein Verfahren zum Aufarbeiten gebrauchter Batterien bekannt, bei dem die Batterien vor einem Zerkleinerungsschritt erwärmt werden, sodass Kunststoffbestandteile der Batterien zerstört werden. Nachteilig an einem derartigen Vorgehen ist, dass die verbleibenden Komponenten der Batterien mit Abbauprodukten des Kunststoffs verunreinigt sein können.

Aus der DE 10 2012 024 876 A1 ist ein System bekannt zum Überführen transportkritischer Elektrolytzellen, die zunächst unter Inertgas zerkleinert und danach mit einem Desaktivierungspulver bestäubt werden, um eine Selbstentzündung des elektrochemisch aktiven Materials zu verhindern. Nachteilig daran ist, dass das entstehende Material dennoch ein vergleichsweise hohes Gefährdungspotential besitzt und dass das Bestäubungspulver selbst ein Expositionsrisiko darstellt und dass die Bildung einer entzündlichen und explosiven Atmosphäre in dem Transportbehälter nicht ausgeschlossen werden kann.

Aus der DE 10 2011 110 083 A1 ist ein Verfahren zum Wiedergewinnen von Aktivmaterial aus einer galvanischen Zelle bekannt, bei dem die galvanischen Zellen zunächst mechanisch zerkleinert, dann vorgetrocknet und nachfolgend gesichtet werden. Schließlich wird der Binder in einem Ofen zersetzt. Eine derartige Vorrichtung eignet sich sehr gut zum effizienten Recyceln größerer Mengen von galvanischen Elementen. Für den Teillast-Betrieb ist diese Anlage jedoch vergleichsweise komplex aufgebaut. Es hat sich zudem gezeigt, dass sich hochtoxische fluororganische Verbindungen und Fluorwasserstoff bilden können, die nur mit großem Aufwand entsorgbar sind.

In der WO 2010/102377 A1 ist ein Verfahren beschrieben, bei dem die zu rezyklierenden Batterien, beispielsweise Lithium-Batterien, in einem Drehrohrofen erhitzt und die entstehenden Gase abgesaugt werden. Nachteilig an diesem Verfahren ist, dass der Elektrolyt so nur schlecht wiederverwertet werden kann und große Mengen Fluorwasserstoff sowie fluororganische Verbindungen entstehen.

In der nachveröffentlichten Druckschrift WO 2016/174156 A1 ist ein Verfahren beschrieben, bei dem gebrauchte Batterien zunächst dezentral deaktiviert und in einen Transportbehälter abgefüllt werden. Nach Transport des zerkleinerten Materials zu einer zentralen Verarbeitungsstelle werden die deaktivierten Zellfragmente weiterverarbeitet.

Der Erfindung liegt die Aufgabe zugrunde, Nachteile im Stand der Technik zu vermindern.

Die Erfindung löst das Problem durch ein Verfahren mit den Merkmalen von Anspruch 1.

Gemäß einem zweiten Aspekt löst die Erfindung das Problem durch eine Batterie-Verarbeitungsanlage mit den Merkmalen von Anspruch 8.

Vorteilhaft an der Erfindung ist, dass durch das Trocknen dem Zerkleinerungsgut so viel Elektrolyt entzogen wird, dass eine elektrochemische Reaktion nicht mehr oder nur noch zu vernachlässigbar kleinem Ausmaß möglich ist. Zudem bildet sich keine entzündliche oder explosive Gasphase über den Batteriefragmenten, da diesen insbesondere die leichtsiedenden organischen Karbonate des Elektrolyten entzogen wurden. Das Zerkleinerungsgut ist daher weitgehend inert und kann, insbesondere dann, wenn es unter Vakuum verpackt wird, sicher transportiert oder weiterverarbeitet werden.

Ein weiterer Vorteil ist es, dass zum Inaktivieren des Zerkleinerungsmaterials kein zusätzliches Material hinzugegeben wird. Das verringert den Aufwand beim Aufarbeiten der Batterien, verringert das Gewicht des inaktivierten Zerkleinerungsguts und erhöht die Reinheit in den folgenden Trenn- und Recyclingschritten. Insbesondere in potentiell folgenden hydrometallurgischen Aufarbeitungsschritten ist eine hohe Produktreinheit ohne Eintrag von Fremdionen vorteilhaft.

Vorteilhaft ist zudem, dass die Bildung von Fluorophosphaten, Fluorwasserstoff, Kohlenstoffmonoxid, polyfluorierten Dibenzodioxinen und Dibenzofuranen, Stickoxiden, Carbonylfluorid und/oder Cyanwasserstoff in relevanter Menge ausgeschlossen werden kann. Fluorophosphate sind oft starke Nervengifte, deren Bildung sicher verhindert werden muss. Zudem ist sichergestellt, dass es aufgrund des geringen Elektrolytgehalts nicht zu einer durch eine elektrochemische Reaktion ausgelöste, selbstverstärkend fortschreitende Wärmeentwicklung kommen kann. Es hat sich herausgestellt, dass sich Fluorwasserstoff und Fluorophosphate bereits bei vergleichsweise niedrigen Temperaturen von über 80°C in signifikanter Menge bilden können.

Vorteilhaft ist zudem, dass das Entfernen des Elektrolyten mit geringem Energieaufwand möglich ist. Zudem kann der Elektrolyt weitgehend wiederverwertet werden.

Das gemäß einer bevorzugten Ausführungsform vorgesehene Kondensieren des verdampften Elektrolyten führt zudem zu einer emissionsarmen Wiederverwertung von Lithium-Batterien.

Mit der erfindungsgemäßen Batterie-Verarbeitungsanlage sind stoffliche Recyclingquoten von über 80% erreichbar, was mit bisherigen Anlangen nicht erreichbar ist.

Im Rahmen der vorliegenden Beschreibung wird unter dem Trocknen insbesondere das Entfernen zumindest eines Lösungsmittels des Leitsalzes verstanden. Insbesondere wird das Trocknen so durchgeführt, dass Kohlensäuredimethylester und/oder Kohlensäureethylmethylester zu zumindest 90 Gewichtsprozent entfernt wird.

Unter einer Lithium-Batterie wird insbesondere ein Akkumulator verstanden, bei dem die elektrochemische Reaktion Lithium und/oder Lithium-Ionen und/oder eine Lithium-Verbindung involviert.

Unter einer Batterie-Verarbeitungsanlage wird insbesondere auch eine Akku-Verarbeitungsanlage zum Verarbeiten von Akkumulatoren verstanden.

Unter dem Transportbehälter wird insbesondere auch eine Transportverpackung verstanden. Vorzugsweise wird die Transportverpackung durch Vakuumverschweißung verschlossen. Gut geeignet als Transportverpackung ist insbesondere Aluminium-Verbundfolie.

Unter der Zerkleinerungseinheit wird insbesondere eine Vorrichtung verstanden, die beim Betrieb die Batterien zerkleinert. Beispielsweise ist die Zerkleinerungseinheit (i) eine Druckzerkleinerungseinheit, bei der die Batterien zwischen zwei Werkzeugflächen zerdrückt werden, (ii) eine Schlagzerkleinerungseinheit, bei der die Batterien auf einer Werkzeugfläche aufliegen und durch Schlag mit einem zweiten beweglichen Werkzeug zertrümmert werden, (iii) eine Scherzerkleinerungseinheit, bei der die Batterien durch zwei sich gegensätzlich bewegende Werkzeugflächen zerkleinert werden, (iv) eine Schneidzerkleinerungseinheit, bei der die Batterien mittels zwei Schneiden in zwei Teile geschnitten werden und/oder (v) eine Prallzerkleinerung, bei der die Batterien gegen eine Wand geworfen werden, gegen ein bewegtes Werkzeug prallen oder zwei Partikel gegeneinander stoßen. Selbstverständlich kann die Zerkleinerungseinheit auch durch zwei oder mehr der genannten Zerkleinerungsmechanismen wirken.

Die Zerkleinerungseinheit ist gemäß einer bevorzugten Ausführungsform Teil einer Zerkleinerungsvorrichtung, die einen Behälter aufweist, in der die Zerkleinerungseinheit angeordnet ist.

Die angegebenen Temperaturen und Drücke beziehen sich stets auf die Temperatur der Atmosphäre in der jeweiligen Vorrichtung. So ist unter dem Merkmal, dass das Trocknen bei einem Druck von höchstens 300 hPa und höchstens 80 °C erfolgt, insbesondere zu verstehen, dass die Temperatur in der Atmosphäre des Trockners höchstens 80°C beträgt. Dass die Temperatur lokal höher sein kann, ist irrelevant.

Die Batterien können im unzerkleinerten Zustand einem Vakuum ausgesetzt werden, sodass zumindest Teile des Elektrolyten verdampfen, wobei das entstehende Gas entweder durch ein Sicherheitsventil im Akkumulator entweicht oder die Batterie durch die Druckdifferenz zwischen der äußeren Umgebung und dem Innendruck zerstört wird, sodass verdampfender Elektrolyt austreten kann. Da der Elektrolyt zumeist zwischen eng gewickelten oder gestapelten und verpressten Schichten aus Elektroden und Separator und in deren Poren vorliegt und mit anderen Bestandteilen der Batterien verbunden vorliegt, kann dieses Vorgehen jedoch zeitintensiv sein. Es ist daher oft günstiger und stellt eine bevorzugte Ausführungsform der Erfindung dar, dass die Batterien mechanisch zerkleinert werden, beispielsweise durch Schneiden, Scheren, Pralleinwirkung, Zertrennen und/oder Quetschen. So steht für den Stoffübergang in die Gasphase eine größere Grenzfläche zur Verfügung.

Vorzugsweise erfolgt das Trocknen während zumindest 50% der Trockenzeit bei einem Druck von höchstens 30 hPa. Alternativ oder zusätzlich beträgt ein Minimaldruck beim Trocknen höchstens 50 hPa. So wird ein sehr hoher Anteil des Elektrolyten entfernt. Unter dem Minimaldruck ist insbesondere der kleinste Atmosphärendruck in der Trockenvorrichtung zu verstehen, der für zumindest eine Minute herrscht.

Das Trocknen erfolgt simultan mit dem Zerkleinern. in anderen Worten wird an eine Zerkleinerungsvorrichtung, in der die Batterien zerkleinert werden, ein Vakuum mit einem Druck von höchstens 300 hPa angelegt. Vorteilhaft hieran ist, dass die beim Zerkleinern eingebrachte mechanische Energie das Verdampfen des Elektrolyten unterstützt. Es ist daher entbehrlich, zusätzliche Heizenergie zum Verdampfen des Elektrolyten in das Zerkleinerungsgut einzubringen (obwohl dies möglich und von der Erfindung umfasst ist). Außerdem ist es entbehrlich, das Zerkleinerungsgut beim Zerkleinern zu kühlen (obwohl dies möglich und von der Erfindung umfasst ist). Die Zerkleinerungseinheit bewirkt zudem ein Umwälzen des Zerkleinerungsguts, was das Trocknen beschleunigt.

Günstig ist es, wenn das Trocknen unter Rühren und/oder Umwälzen des Zerkleinerungsguts erfolgt. So werden die galvanischen Elemente aus Anode, Separator und Kathode voneinander getrennt. Eine Behinderung der Verdampfung durch zusammenklebende Folien wird verhindert. Es wird mechanische Energie zur Trennung von Stromsammlerfolie und Beschichtung eingebracht und die resultierende Reibungswärme führt dem System die Verdampfungswärme zu.

Vor dem Zerkleinern werden die gebrauchten Batterien vorzugsweise demontiert. Das heißt, dass größere Batteriesysteme in ihre kleineren Unterbausteine, die Module oder Stacks, demontiert werden oder sogar die Zellen, die das elektrochemisch wirksame Material enthalten, von der Ansteuerelektronik getrennt werden. Die Ansteuerelektronik umfasst beispielsweise Halbleiterbauelemente und/oder Sensoren und dient der Ladesteuerung der Batterien.

Das Trocknen erfolgt unter Vakuum. Gemäß seiner breitesten Form löst die Erfindung das Problem durch ein gattungsgemäßes Verfahren, bei dem das Vakuum so groß gewählt ist, dass der Dampfdruck von Kohlensäuredimethylester bei 80°C, insbesondere bei 70°C, unterschritten wird. Besonders günstig ist es jedoch, wenn das Trocknen unter einem Druck von höchstens 300 hPa, insbesondere höchstens 100 hPa erfolgt. Bei so niedrigen Drücken verdampfen wesentliche Bestandteile der meisten Elektrolyten, insbesondere Kohlensäuredimethylester und Kohlensäureethylmethylester, bereits bei Temperaturen von weniger als 80°C. Niedrige Temperaturen haben den Vorteil, dass die Bildung von Fluorwasserstoff und fluororganischen Verbindungen behindert wird. Beides stellt eine potentielle Gefährdung für die Batterie-Verarbeitungsanlage sowie die Umgebung dar. Es ist daher günstig, deren Entstehen zu verhindern.

Das Trocknen erfolgt bei einer Temperatur, die unterhalb einer Zersetzungstemperatur liegt. Unter der Zersetzungstemperatur wird insbesondere die kleinste Temperatur verstanden, für die gilt, dass nach dem Halten des Zerkleinerungsguts auf dieser Temperatur für eine Stunde zumindest 80 Masseprozent des Binders der Lithium-Batterien sich in gasförmige Bestandteile zersetzt haben. Die Zersetzungstemperatur kann damit gemessen werden, indem die Temperatur des Zerkleinerungsguts sukzessive erhöht wird und erfasst wird, wann es zu einem Masseverlust, insbesondere durch Gasentwicklung aufgrund einer Zersetzung des Binders, kommt und das angegebene Kriterium erfüllt ist. Gegebenenfalls muss der Versuch mit jeweils einer neuen Probe an Zerkleinerungsgut bei jeweils erhöhter Temperatur mehrfach durchgeführt werden.

Gemäß einer bevorzugten Ausführungsform umfasst das Verfahren das Kondensieren der beim Trocknen der entstandenen Gase. Das erfolgt vorzugsweise bei Umgebungsdruck, wobei eine Abweichung von ± 50 hPa möglich ist. Günstig ist es, wenn die Temperatur beim Kondensieren zumindest 0°C beträgt. Das vermindert die aufzuwendende Kühlleistung und verhindert Eisbildung. Vorzugsweise beträgt die Kühlleistung zumindest 4 Kilowatt und höchstens 40 Kilowatt bezogen auf eine Tonne pro Stunde verarbeiteter Batterien. Alternativ ist die Temperatur beim Kondensieren kleiner als 0°C, sodass der Atmosphäre Wasser durch Bildung von Eis entzogen wird. Es ist möglich, dass der Kondensator zwei oder mehr Zonen unterschiedlicher Temperatur hat. Vorzugsweise ist die Temperatur in einer der beiden Zonen dann so hoch, dass es zu keiner Eisbildung kommt, und in einer anderen Zone so niedrig, dass Wasser als Eis abgeschieden wird.

Günstig ist es, wenn die Temperatur beim Kondensieren höchstens 50°C, vorzugsweise höchstens 30°C, insbesondere höchstens 20°C, beträgt. Auf diese Weise werden die organischen Karbonate der Batterien fast vollständig zurückgewonnen. Es entstehen zudem kaum Abgase und der Energieaufwand für das Kondensieren ist klein.

Das Zerkleinern der Batterien wird vorzugsweise so durchgeführt, dass zumindest 90 Gew.-% der Bestandteile des Zerkleinerungsguts ein Siebmaß von höchstens 50 mm, insbesondere höchstens 30 mm, vorzugsweise höchstens 20 mm, haben. Hierunter ist zu verstehen, dass 90 Gew.-% der Bestandteile durch ein Sieb fallen, das eine Maschenweite von 50 mm (bzw. die jeweils andere angegebene Weite) hat. Durch eine solche Zerkleinerung werden Mikrokurzschlüsse vermieden und so die Sicherheit des Transports, der Lagerung und der weiteren Verarbeitung erhöht.

Günstig ist es, wenn das Trocknen unter einer Atmosphäre erfolgt, in der der Wasser-Partialdruck kleiner ist als 50 Pa, insbesondere kleiner als 10 Pa. Ein geringer Wasser-Partialdruck führt zu einer geringen Reaktionsrate von Lithium-Verbindungen zu Lithium-Hydroxid und damit zu nur geringer WasserstoffEntwicklung. Das verhindert die Bildung von zündfähigen Wasserstoff-Sauerstoff-Gemischen und trägt zur Anlagensicherheit bei.

Günstig ist es zudem, wenn der Sauerstoff-Partialdruck beim Trocknen höchstens 30 Millibar, insbesondere höchstens 10 Millibar beträgt. Die Reaktion von Sauerstoff mit oxidierbaren Bestandteilen der Batterien wird so weitgehend unterdrückt. Es ist möglich, den niedrigen Sauerstoff-Partialdruck durch einen geringen Druck beim Trocknen zu erreichen. Alternativ oder zusätzlich kann das Trocknen in einer Inertgas-Atmosphäre erfolgen.

Gemäß einer bevorzugten Ausführungsform umfasst das Verfahren die Schritte eines kontinuierlichen Erfassens einer Wasserdampfkonzentration beim Zerkleinern und/oder beim Trocknen und eines Verringerns der Wasserdampfkonzentration, wenn ein vorgegebener Schwellenwert überschritten wird. Unter der Wasserdampfkonzentration wird insbesondere ein Anteil an Wasserdampf bezogen auf die Gesamtheit der Bestandteile der Atmosphäre verstanden. Insbesondere wird unter der Wasserdampfkonzentration auch ein Wasserdampf-Partialdruck verstanden. Das Verringern der Wasserdampfkonzentration kann beispielsweise ein Vermindern des Drucks und/oder ein Zuführen von Inertgas umfassen. Der Schwellenwert für die Wasserdampfkonzentration ist vorzugsweise so gewählt, dass unterhalb des Schwellenwerts eine Bildung nennenswerter Mengen von Fluorwasserstoff durch Zersetzung des Leitsalzes, bspw, LiPF₆, sowie eine Redaktion des Wassers mit metallischem Lithium in nennenswertem Ausmaß unmöglich ist. Diese Kriterien sind bei einem Taupunkt von -40°C erfüllt. Es ist möglich, nicht aber notwendig, dass die Wasserdampfkonzentration direkt gemessen wird, beispielsweise per Spektroskopie, insbesondere Infrarot-Spektroskopie. Es ist beispielsweise auch möglich, dass die Summe der Konzentrationen an Inertgas, Sauerstoff und organischen Verbindungen ermittelt und angenommen wird, dass der Rest aus Wasserdampf besteht.

Gemäß einer bevorzugten Ausführungsform umfasst das Verfahren die Schritte eines kontinuierlichen Erfassens einer Sauerstoffkonzentration beim Zerkleinern und/oder beim Trocknen und eines Verringerns der Sauerstoffkonzentration, wenn ein vorgegebener Schwellenwert überschritten wird. Unter der Sauerstoffkonzentration wird insbesondere ein Anteil an Sauerstoff bezogen auf die Gesamtheit der Bestandteile der Atmosphäre verstanden. Insbesondere wird unter der Sauerstoffkonzentration auch ein Sauerstoff-Partialdruck verstanden. Das Verringern der Sauerstoffkonzentration kann beispielsweise ein Vermindern des Drucks und/oder ein Zuführen von Inertgas umfassen. Der Schwellenwert für die Sauerstoffkonzentration ist vorzugsweise so gewählt, dass unterhalb des Schwellenwerts eine Explosion unmöglich ist. Es ist möglich, nicht aber notwendig, dass die Sauerstoffkonzentration direkt gemessen wird, beispielsweise per Nernst-Sonde, Lambda-Sonde, mit paramagnetischen Sensoren oder mit einer Widerstandssonde. Es ist beispielsweise auch möglich, dass die Konzentrationen des Sauerstoffs durch die Messung von in Luft mit Sauerstoff vergesellschafteten Gasen, wie bspw. Kohlenstoffdioxid, zu bestimmen, indem angenommen wird, dass Sauerstoff im gleichen Mischungsverhältnis zum gemessenen Gas wie in der Luft vorliegt,

Insbesondere umfasst das Verfahren die Schritte (i) beim Trocknen kontinuierliches Überwachen einer Konzentration an organischen Karbonaten in der Atmosphäre der Trockenvorrichtung und (ii) Beenden des Trocknens erst dann, wenn eine untere Explosionsgrenze unterschritten ist. Die untere Explosionsgrenze ist die Konzentration an organischen Bestandteilen, für die gilt, dass nach Füllen des Zerkleinerungsguts in einen Behälter in Luft bei 23°C unter 1013 hPa und 80%-Luftfeuchte eine Zündung zu keiner Explosion führt, wohl aber eine höhere Konzentration. Ist diese untere Explosionsgrenze noch nicht unterschritten, wird das Trocknen fortgesetzt.

Die Konzentration an Inertgas wird vorzugsweise auf zumindest 90 Gew.-%, insbesondere zumindest 95 Gew.-%, vorzugsweise zumindest 97 Gew.-% eingestellt. Die Messung der Konzentration erfolgt beispielsweise spektroskopisch.

Alternativ oder zusätzlich wird ein Fortschrittsparameter erfasst, der den Fortschritt des Trocknens beschreibt, und das Trocknen wird beendet, wenn der Fortschrittsparameter einen vorgegebenen Fortschrittsparameter-Schwellenwert erreicht. Der Fortschrittsparameter ist zu Beginn des Trocknens klein und wächst mit Fortschreiten des Trocknens. Äquivalent dazu ist der Fall, das der Fortschrittsparameter ist zu Beginn des Trocknens groß ist und mit Fortschreiten des Trocknens abnimmt.

Beispielsweise ist der Fortschrittsparameter die Konzentration an gasförmigem Elektrolyten im abgesaugten Gas. Es ist möglich, nicht aber notwendig, dass dazu die Konzentration an gasförmigem Elektrolyten, insbesondere organischen Karbonaten, direkt gemessen wird, beispielsweise per Spektroskopie, insbesondere Infrarot-Spektroskopie. Es ist alternativ oder zusätzlich möglich, dass der Fortschrittsparameter der Kondensat-Strom (gemessen beispielsweise in Volumen, Masse, Gewicht oder Stoffmenge pro Zeiteinheit) an kondensierten Gasbestandteilen in einem etwaig vorhandenen Kondensator ist. Wiederum alternativ ist der Fortschrittsparameter der Druck im Trocknungsbehälter oder der Gasstrom aus dem Trocknungsbehälter. Bei konstanter Pumpleistung hängt der Druck in guter Näherung nur von dem Trocknungsfortschritt und der Temperatur des Zerkleinerungsguts ab. Ist der Elektrolyt weitgehend verdampft, sinkt der Druck. Zudem sinkt der Gasstrom.

Es wird das Zerkleinerungsgut nach dem Trocknen direkt weiterverarbeitet. Insbesondere wird das Zerkleinerungsgut nach dem Trocknen nicht in einen Transportbehälter abgefüllt. Erfindungsgemäß wird das Zerkleinerungsgut nach dem Trocknen mittels eines kontinuierlich oder diskontinuierlich fördernden Förderers zur weiteren Verarbeitung, beispielsweise einer Trennvorrichtung, transportiert. Insbesondere ist der Förderer staubdicht mit dem Trockner verbunden. Beispiele für kontinuierlich fördernde Förderer sind staubdichte Rohrkettenförderer, vorzugsweise mit zwei regelbaren Auslass-Schiebern, Förderbänder, Fördertröge, Förderschnecken, Becherförderer oder semi-kontinuierliche Förderer.

Bevorzugt ist ein Verfahren, bei dem das Trocknen des Zerkleinerungsguts erst beendet wird, wenn sich nach Beenden des Trocknens kein entzündliches oder explosives Gasgemisch über dem abgefüllten Zerkleinerungsgut mehr bilden kann und/oder wenn das Zerkleinerungsgut so trocken ist, dass sich im Transportbehälter oder während der Weiterverarbeitung ein entzündliches oder explosives Gasgemisch ergeben kann. Unter dem Merkmal, dass das Trocknen beendet wird, wenn sich nach Beenden des Trocknens kein entzündliches oder explosives Gasgemisch über dem abgefüllten Zerkleinerungsgut bilden kann, wird insbesondere verstanden, dass sich in einem Transportbehälter in Form eines 50-Literbehälter, der zur Hälfte (bezogen auf sein Volumen) mit dem Zerkleinerungsgut gefüllt ist, innerhalb von einer Woche bei 50°C und 1013 hPa kein zündfähiges Gasgemisch bildet. Ob das Kriterium erfüllt ist, wird in Vorversuchen ermittelt. Bildet sich ein zündfähiges Gasgemisch, muss das Trocknen länger und/oder bei niedrigerem Druck durchgeführt werden. Die Vorversuche werden so lange wiederholt, bis eine Trocknungsdauer und/oder ein Trocknungsdruck ermittelt ist, bei der das Merkmal bei einem Testsatz von drei Transportbehälter für alle drei Transportbehälter erfüllt ist.

Das Zerkleinerungsgut wird so lange getrocknet, bis ein Elektrolytgehalt im Zerkleinerungsgut so klein ist, dass eine elektrochemische Reaktion unmöglich ist. In anderen Worten ist der Elektrolytgehalt kleiner als ein Schwellenwert, wobei der Schwellenwert so gewählt ist, dass die Zellspannung bei Unterschreiten dieses Schwellenwerts auf höchstens ein Viertel abgesunken ist. Dieser Schwellenwert wird beispielsweise dadurch bestimmt, dass die Zellenspannung einer Batterie in Abhängigkeit vom Elektrolytgehalt bestimmt wird. Kurz vor dem Erreichen des Schwellenwerts bricht die Zellspannung zusammen, das heißt, dass sie um zumindest 75% absinkt. Ist der Schwellenwert unterschritten, enthält die Batterie so wenig Elektrolyt, dass in guter Näherung keine elektrochemische Reaktion mehr möglich ist.

Vorzugsweise wird das Zerkleinerungsgut so lange getrocknet, dass eine Menge von 50 kg an Zerkleinerungsmaterial, das kompaktiert in einem 50 Liter-Fass enthalten ist, keine oder eine nur so geringe Wärmeentwicklung zeigt, dass ein thermisches Durchgehen, also eine thermisch induzierte Kettenreaktion, für zumindest zwei Monate ausgeschlossen ist und dass eine etwaige Gasentwicklung zudem so gering ausgebildet ist, dass nach zwei Wochen kein Überdruck entsteht, wenn zu Beginn ein Unterdruck von 500 hPa herrscht.

Günstig ist es, wenn das Zerkleinerungsgut so lange getrocknet wird, bis der Elektrolytgehalt an organischen Komponenten, die bei 50°C flüchtig sind, höchstens 3 Gew.-%, höchstens insbesondere 2 Gew.-%, besonders bevorzugt höchstens 1,5 Gew.-%, beträgt.

Vorzugsweise wird das Trocknen so lange durchgeführt, dass der akkumulierte Gehalt an organischen Karbonaten aus dem Elektrolyten, die bei 80°C flüchtig sind, in der Atmosphäre über dem Zerkleinerungsgut 3 Vol.-% unterschreitet.

Insbesondere wird das Trocknen so lange durchgeführt, bis der Gehalt an Kohlensäuredimethylester 4 Vol.-%, insbesondere 3 Vol.-%, unterschreitet und/oder der Gehalt an Cyclohexylbenzol 1 Vol.-%, insbesondere 0,5 Vol.-%, unterschreitet.

Gemäß einer bevorzugten Ausführungsform wird das Zerkleinerungsgut in der Trockenvorrichtung, insbesondere beim Entnehmen aus der Trockenvorrichtung, mittels eines Rührwerks bewegt. Bei dem Rührwerk kann es sich um die Zerkleinerungseinheit handeln, das ist aber nicht notwendig. Das Rührwerk dient insbesondere zum Verhindern von Verstopfungen und/oder zum Eintrag von Wärmeenergie in das Zerkleinerungsgut und/oder der Trennung der geschichteten Folien, so dass die Elektrolytverdampfung nicht sterisch behindert wird. Zudem bewirkt der mechanische Energieeintrag eine zumindest teilweise Ablösung der Beschichtung von den Stromsammlerfolien. Dadurch entsteht weitere freie Oberfläche der Beschichtungsfragmente, welche die Trocknung begünstigt und die folgende Trennung von Beschichtung und Folien erleichtert. Vorzugsweise hat das Rührwerk eine Leistung von zumindest 1 kW pro Kubikmeter Trocknervolumen. Günstig ist es, wenn das Rührwerk zumindest ein Rührblatt aufweist, das so angeordnet ist, dass es das Zerkleinerungsgut nach oben bewegt.

Vorzugsweise wird mittels des Rührwerks mehr als 35%, insbesondere zumindest 50%, einer zum Trocknen des Zerkleinerungsguts notwendigen Verdampfungswärme zugeführt. In anderen Worten ist im Idealfall eine zusätzliche Heizung zum Beheizen des Zerkleinerungsguts entbehrlich. Ist eine solche Heizung vorhanden, ist ihre Leistung vorzugsweise kleiner als die Leistung des Rührwerks. Das Einbringen von Energie in das Zerkleinerungsgut per Rührwerk hat den Vorteil, dass es zu einem Trennen beispielsweise von Beschichtung und Trägerfolie und anderen Komponenten der Batterie kommt.

Das Rührwerk hat vorzugsweise eine Leistung von zumindest 1 Kilowatt pro Kubikmeter an Volumen der Trockenvorrichtung.

Vorzugsweise besitzt die Trockenvorrichtung eine Heizung, die welche die Wärme aus der Wärmeabfuhr der zumindest einen Vakuumpumpe und/oder des Kondensators bezieht. Durch das Kondensieren des Elektrolyten im Kondensator entsteht Kondensationswärme. Im Kondensator kann daher eine Temperatur von zumindest 60°C herrschen. Die Wärme wird beispielsweise mittels eines Wärmeübertragungsfluids, insbesondere eines Gases oder einer Flüssigkeit, übertragen. Beispielsweise wird das Wärmeübertragungsfluids zum Heizen einer Außenwand der Trockenvorrichtung verwendet.

Das Zerkleinern und das Trocknen wird in nur einem Behälter, insbesondere der Zerkleinerungsvorrichtung, durchgeführt. In anderen Worten finden das Zerkleinern und das Trocknen im Unterdruck gleichzeitig in einem Behälter statt. Vorteilhaft hieran ist, dass die mechanische Energie, die zum Zerkleinern zugeführt wird und in Wärmeenergie umgewandelt wird, beim Verdampfen des Elektrolyten aufgenommen und so abgeführt wird. So wird einerseits eine übermäßige Erwärmung des Zerkleinerungsguts verhindert, andererseits ist eine Heizung zum Trocknen entbehrlich.

Besonders günstig ist es, wenn das Vakuum von einem Absolutdruck von höchstens 300 hPa mittels einer Strahlpumpe erzeugt wird. Strahlpumpen sind, insbesondere bei geeigneter Wahl des Strahlmediums, weitgehend unempfindlich gegen aggressive abzupumpende Gase. Günstig ist es, wenn das Strahlmedium, das eine Flüssigkeit ist, einen pH-Wert von zumindest 8, insbesondere von zumindest 9, beispielsweise zumindest 12, hat. In diesem Fall können sich unerwünschte Bestandteile des Gases, das abgepumpt wird, zersetzen oder zu weniger schädlichen Substanzen reagieren. So kann beispielsweise Kohlensäuredimethylester und/oder Kohlensäureethylmethylester durch eine Verseifungsreaktion abgebaut werden. Etwaig im Strahlenmedium enthaltener Fluorwasserstoff kann im basischen Milieu in einer Säure-Base-Reaktion zu einem ungefährlichen Salz umgesetzt werden.

Vorzugsweise enthält das Strahlenmedium eine Fluor fällende Substanz. Beispielsweise kann das Strahlenmedium Natriumkarbonat, Kaliumkarbonat oder Calziumkarbonat enthalten. Die bei der Reaktion mit einer Fluorverbindung, insbesondere Fluorwasserstoff, entstehenden Salze werden vorzugsweise abgetrennt, insbesondere abgefiltert oder aussedimentiert. Auf diese Weise wird zumindest weitgehend verhindert, dass Fluorwasserstoff oder andere giftige fluorhaltige Verbindungen in die Umgebung abgegeben werden können.

Vorzugsweise erfolgt das Trocknen bei einer Temperatur von höchstens 80°C. In diesem Fall entsteht kaum Fluorwasserstoff. Das erhöht die Lebensdauer der Batterie-Verarbeitungsanlage und verringert die Umweltgefährdung.

Gemäß einer bevorzugten Ausführungsform umfasst das Verfahren die Schritte des Kondensierens von Bestandteilen des Elektrolyten durch Abkühlen und/oder Druckerhöhen, sodass ein Elektrolytkondensat entsteht. Beispielsweise wird das Kondensieren an einer Stelle durchgeführt, die bezüglich des Gasflusses zwischen dem Trockner und der Vakuumpumpe liegt. Vom Trockner kommende Gase müssen daher in diesem Fall zunächst einen Kondensator passieren, bevor sie zur Vakuumpumpe gelangen können. Das führt dazu, dass gasförmiger Elektrolyt, der in dem Gas vorliegt, das beim Trocknen entsteht, zumindest zu einem überwiegenden Teil im Kondensator abgeschieden wird, bevor das verbleibende Gas zur Pumpe gelangt. So kann Elektrolyt zurückgewonnen werden. Zudem verringert sich der Gasstrom durch die Vakuumpumpe, was deren Lebensdauer verlängert und deren Energieverbrauch reduziert.

Gemäß einer bevorzugten Ausführungsform umfasst das Verfahren alternativ den Schritt der Gasreinigung durch Adsorption der flüchtigen organischen Bestandteile an einem Aktivkohlefilter vor oder nach der Verdichtereinheit.

Vorzugsweise umfasst das erfindungsgemäße Verfahren alternativ oder zusätzlich den Schritt eines Reinigens des Gases, das beim Trocknen entsteht, bevor dieses die Vakuumpumpe erreicht. Das kann beispielsweise auch dadurch erfolgen, dass das Gas einen Aktivkohlefilter und/oder einen Filter passiert, in dem mit Fluorwasserstoff reagierende Substanzen enthalten sind, beispielsweise ein Calziumsalz wie Calziumkarbonat oder ein Kaliumsalz wie Kaliumkarbonat.

Vorzugsweise wird ein Hochtemperatur-Trocknen, bei dem sich der Binder zersetzt, so durchgeführt, dass die entstehenden Zersetzungsgase sich nicht mit den Gasen mischen, die beim Niedrigtemperatur-Trocknen entstehen. Es ist möglich, dass das Hochtemperatur-Trocknen und das Niedertemperatur-Trocknen bei unterschiedlichen Drücken erfolgt. Beispielsweise kann das Hochtemperatur-Trocknen bei Normaldruck erfolgen.

Unter dem Aktivmaterial wird der Stoff verstanden, der beim Betrieb der Batterien elektrochemisch reagiert. Unter dem Träger für das Aktivmaterial wird insbesondere eine Trägerfolie verstanden, auf der das Aktivmaterial in Form von Partikeln aufgebracht ist. Beispielsweise handelt es sich bei der Trägerfolie um eine Folie aus Aluminium oder eine Aluminiumlegierung. Der Binder ist der Stoff, der das Aktivmaterial mit dem Träger verbindet, beispielsweise enthält der Binder Polyvinylidenfluorid.

Günstig ist es, wenn beim Zerkleinern der Batterien flüssiger Stickstoff zugegeben wird. Das kühlt die Zerkleinerungsmaschine und das Zerkleinerungsgut und verdrängt zudem Sauerstoff und Wasserdampf aus der Atmosphäre.

Günstig ist es, wenn das Zerkleinern bei dem Taupunkt - 40 °C und/oder einem Sauerstoff-Partialdruck von höchstens 40 hPa, insbesondere höchstens 15 hPa erfolgt.

Gemäß einer bevorzugten Ausführungsform umfasst das Verfahren die Schritte eines Abtrennens von Hartteilen und/oder eines Separierens von Aktivmaterial vom Träger, insbesondere durch eine zweite Zerkleinerungsstufe und/oder Luftstrahlsieben, sodass eine Aktivmaterialfraktion und eine Trägerfaktion entstehen, und eines getrennten Verpackens von Aktivmaterialfraktion und Trägerfraktion in jeweilige Transportbehältnisse. Günstig ist es, wenn diese Transportbehältnisse luftdicht ausgebildet sind. Durch das Trennen von Aktivmaterialfraktion und Trägerfraktion ist ein Transport in der Regel ohne Genehmigungen möglich. Ein weiterer Vorteil ist, dass derartig getrennte Fraktionen nur eine geringe Gefährdung darstellen.

Das Entnehmen des Zerkleinerungsguts aus dem Transportbehälter erfolgt vorzugsweise unter Vakuum und/oder unter Schutzgas.

Es ist möglich, nicht aber notwendig, dass das Zerkleinerungsgut unter Vakuum in den Transportbehälter abgefüllt wird. Günstig ist es, wenn der Transportbehälter ein Vakuumbehälter ist, insbesondere ein evakuierter Vakuumbehälter, sodass im Transportbehälter nach dem Verschließen ein Unterdruck oder Vakuum herrscht. Alternativ kann der Transportbehälter mit einem Inertgas gefüllt werden.

Gemäß einer bevorzugten Ausführungsform wird das Verfahren so durchgeführt, dass ein Druck von 100 hPa für zumindest eine Minute unterschritten wird.

In einer bevorzugten Batterie-Verarbeitungsanlage sind die Trennungseinheit und die Trockenvorrichtung in einem gemeinsamen Standard-Container angeordnet. Das hat den Vorteil, dass die Batterie-Verarbeitungsanlage besonders einfach transportiert werden kann.

Die Trockenvorrichtung ist eingerichtet zum Trocknen des Zerkleinerungsguts für eine so lange Zeit, bis ein Elektrolytgehalt so klein ist, dass eine elektrochemische Reaktion unmöglich ist. Wird die Trockenvorrichtung im Chargenbetrieb betrieben, was eine mögliche Ausführungsform darstellt, so wird das Trocknen beispielsweise für eine vorgegebene Zeitspanne durchgeführt. Alternativ oder zusätzlich wird der Gehalt an organischen Substanzen, beispielsweise an organischen Carbonaten, in der Atmosphäre in der Trockenvorrichtung kontinuierlich gemessen und das Trocknen beendet, wenn eine vorgegebene Schwellen-Konzentration unterschritten wird.

Gemäß einer bevorzugten Ausführungsform umfasst die Batterie-Verarbeitungsanlage, insbesondere die Vakuumanlage, einen Kondensator, der eingerichtet ist zum Kondensieren von organischen Bestandteilen der Atmosphäre im Trockner, insbesondere von organischen Carbonaten, beispielsweise von Dimethylcarbonat, Ethylmethylcarbonat und/oder Ethylencarbonat. Der Kondensator kann auch als Kondensiervorrichtung oder als Verflüssiger bezeichnet werden. Vorzugsweise ist der Kondensator in Materialflussrichtung hinter einer Vakuumpumpe angeordnet, mittels der der Trockner evakuiert wird. Günstig ist es, wenn der Kondensator gekühlt ist, vorzugsweise auf eine Temperatur von höchstens 90°C, vorzugsweise höchstens 80°C, insbesondere höchstens 70°C. Um den Kühlaufwand klein zu halten wird der Kondensator, sofern er gekühlt wird, auf eine Temperatur von zumindest -10°C, insbesondere zumindest 10 °C, gekühlt.

Günstig ist es, wenn die Trockenvorrichtung ein Rührwerk aufweist, beispielsweise einen Ankerrührer oder einen Stabrührer, dessen Rührstäbe quer zu einer Rührwelle angebracht sein können. Alternativ oder zusätzlich ist das Rührwerk ein externes Rührwerk, das den Trockner als Ganzes bewegt.

Die Batterie-Verarbeitungsanlage besitzt eine Vakuumanlage, die mit der Trockenvorrichtung zum Erzeugen eines Vakuums in der Trockenvorrichtung verbunden ist. Besonders günstig ist es, wenn auch die Vakuumanlage im Standard-Container angeordnet ist. Bei dem Standard-Container handelt es sich vorzugsweise um einen Container nach ISO-Norm 668, vorzugweise um einen 40-Fuß-Container oder einen 20-Fuß-Container.

Beispielweise umfasst die Vakuumanlage eine Strahlpumpe, bei der ein Strahlmedium zum Erzeugen des Unterdrucks verwendet wird.

Die Zerkleinerungseinheit ist in der Trockenvorrichtung angeordnet. Es existiert in anderen Worten in diesem Fall ein Behälter, in dem die Batterien sowohl zerkleinert werden und in dem das Zerkleinerungsgut getrocknet wird. Beide Prozesse laufen simultan und unter Vakuum ab. In diesem Fall ist ein Rührwerk entbehrlich.

Vorzugsweise umfasst die Batterie-Verarbeitungsanlage eine Hartmetallabtrennvorrichtung und/oder eine Leichtfraktionabtrennvorrichtung, eine Separiervorrichtung, insbesondere eine Klassiervorrichtung, zum Separieren von Aktivmaterial vom Träger, insbesondere durch eine zweite Zerkleinerungsstufe und/oder Luftstrahlsieben, sodass eine Aktivmaterialfraktion und eine Trägerfraktion entsteht, und vorzugsweise eine zweite Abfüllvorrichtung zum getrennten Abfüllen von Aktivmaterialfraktion und Trägerfraktion. Günstig ist es, wenn diese Abfüllvorrichtung zum Abfüllen unter Unterdruck und/oder unter Inertgas mindestens jedoch staubdicht ausgebildet ist.

Unter einer Hartmetallabtrennvorrichtung wird insbesondere eine Vorrichtung zur Abtrennung von Fragmenten peripherer Bestandteile des Betriebssystems, der Batteriezellhülle und der Strom-Kontakte verstanden. Beispielsweise umfasst die Hartmetallabtrennvorrichtung eine Magnetseparationsvorrichtung und/oder einen Sichter, insbesondere einen Querstromsichter und/oder einen Zickzack-Sichter. Unter der Separiervorrichtung wird insbesondere eine Vorrichtung zum zur Abtrennen der Separatorfolie verstanden.

Die Leichtfraktionabtrennvorrichtung umfasst vorzugsweise einen Zickzack-Sichter und/oder einen Lufttrenner, wobei es günstig ist, wenn die Luft im Kreislauf geführt wird. Das reduziert die Staubexposition der Umwelt mit gesundheitsschädlichem Staub.

Vorzugsweise sind die zweite Abfüllvorrichtung und die Separiervorrichtungen in einem gemeinsamen Standard-Container angeordnet, beispielsweise im oben beschrieben ersten Standard-Container, oder einem zweiten Standard-Container. Günstig ist es, wenn der Container staubdicht gekapselt ist.

Vorzugsweise umfasst die Batterie-Verarbeitungsanlage eine Schleuse zwischen der Zerkleinerungseinheit und der Inaktivierungsvorrichtung, insbesondere der Trocknungsvorrichtung. Beispielsweise handelt es sich um eine Zellenradschleuse oder einen Flachschieber. Durch die Schleuse wird der Gaseintrag in die Inaktivierungsvorrichtung, insbesondere die Trocknungsvorrichtung, vermindert. Die Schleuse ist vorzugsweise als Dosierschleuse ausgebildet. So kann die Inaktivierungseinheit während des Betriebes der Zerkleinerungseinheit evakuiert werden.

Wenn das Zerkleinern und das Trocknen in unterschiedlichen Behältern durchgeführt werden, besitzt die Batterie-Verarbeitungsanlage vorzugsweise eine staubdichte, insbesondere eine gasdichte, Fördervorrichtung, die die Zerkleinerungsvorrichtung und die Trockenvorrichtung miteinander verbindet. Als staubdicht wird eine Fördervorrichtung insbesondere dann betrachtet, wenn höchstens 5 Gew.-% aller Partikel mit einem Durchmesser von zumindest 0,1 Mikrometer die Fördervorrichtung in die Umgebung verlassen.

Um die Trockenzeit zwischen Beginn und Ende des Trocknens zu verringern, ist es günstig, wenn die Trockenvorrichtung eine Heizung umfasst. Es kann sich bei der Heizung um eine konduktive oder eine konvektive Heizung handeln, welche vorzugsweise die Kompressionswärme der Pumpen und die Kondensationswärme in den Trockner einbringt.

Es hat sich herausgestellt, dass die Qualität des zurückgewonnenen Elektrolyten besonders hoch ist, wenn die Trockenvorrichtung zumindest eine trockenlaufende Vakuumpumpe, vorzugsweise ausschließlich trockenlaufende Vakuumpumpen, aufweist.

Die Pumpleistung der Vakuumanlage beträgt bei 300 hPa zumindest das Fünfzigfache des Volumens des Innenraums der Trockenvorrichtung pro Stunde. Auf diese Weise kann die Trockenzeit klein gehalten werden.

Die Trockenzeit lässt sich zudem vermindern, wenn - wie gemäß einer bevorzugten Ausführungsform vorgesehen - die Trockenvorrichtung zumindest zwei Vakuumpumpen aufweist, die sich in ihrem Volumenstrom bei 400 hPa und ihrem maximal erreichbaren Minimaldruck unterscheiden. So hat eine der beiden Vakuumpumpen vorzugsweise eine hohe Volumenstromleistung (gemessen in Litern pro Sekunde bei 400 hPa), aber einen geringeren Minimaldruck. Der maximal erreichbare Minimaldruck ist der kleinste Druck, der mit der Pumpe erreichbar ist. Es ist dann möglich, die Pumpen in ihren optimalen Arbeitsbereichen einzusetzen. Die in Materialflussrichtung ersten Pumpen gewährleisten einen hohen Volumenstrom bei niedrigen Drücken, während nachgelagerte Pumpen kleinere Volumenströme gegen Umgebungsdruck verdichten.

Beispielsweise besitzt die Vakuumanlage zumindest eine trocken laufende Wälzkolbenpumpe und/oder zumindest eine trocken laufende Schraubenvakuumpumpe.

Die Zerkleinerungseinheit besitzt vorzugsweise ein Bodensieb zum Begrenzen der maximalen Größe des Zerkleinerungsguts. Das erleichtert die Weiterverarbeitung des Zerkleinerungsguts und vermindert die Gefahr einer Nachträglichen Erhitzung und Selbstentzündung des Zerkleinerungsgutes durch Kurzschlüsse von Batteriefragmenten. Vorzugsweise hat das Bodensieb eine Maschenweite von höchstens 35 mm.

Zum Zuführen von Inertgas zur Trockenvorrichtung besitzt diese vorzugsweise ein Zulassventil, das mit einer Inertgas-Versorgungsvorrichtung zum Zuführen von Inertgas in einen Innenraum der Trockenvorrichtung verbunden ist. Insbesondere wird verflüssigtes, also bei 22°C und 1013 hPa gasförmigem, Inertgas mit einer Temperatur von höchstens -30°C zugeführt. Zum gleichen Zweck besitzt die Zerkleinerungsvorrichtung alternativ oder zusätzlich ein Zuführventil, das mit einer Inertgas-Versorgungsvorrichtung zum Zuführen von Inertgas in einen Innenraum der Zerkleinerungsvorrichtung verbunden ist. Die Inertgas-Versorgungsvorrichtung ist vorzugsweise zum Bereitstellen von verflüssigtem Inertgas.

Zum Messen einer Sauerstoffkonzentration, insbesondere zum Ermitteln, ob eine Explosionsgrenze überschritten ist, besitzt die Zerkleinerungseinheit eine Sauerstoff-Erfassungsvorrichtung zum Erfassen einer Sauerstoffkonzentration in der Zerkleinerungseinheit.

Die Batterie-Verarbeitungsanlage kann eine Verbrennungsvorrichtung zur thermischen oder katalytischen Verbrennung von gasförmigen Bestandteilen des Elektrolyten besitzen. Diese ist vorzugsweise in Materialflussrichtung hinter dem Kondensator und/oder vor einer Abgasöffnung angeordnet. So werden keine Bestandteile des Elektrolyten durch die Abgasöffnung in die Umgebung entlassen.

Vorzugsweise besitzt die Batterie-Verarbeitungsanlage eine Partikel-Entfernvorrichtung zum Entfernen von Partikeln aus dem aus der Trockenvorrichtung abgezogenen Gasstrom. Die Partikel-Entfernvorrichtung kann zum Bespiel einen Zyklon und/oder einen Filter und/oder Aktivkohle umfassen.

Vorzugsweise werden die beim Trocknen entstehenden Gase abgesaugt und/oder das Bewegen mittels des Rührwerks wird so durchgeführt, dass zumindest 50 Gew.-% des Beschichtungsmaterials des Zerkleinerungsguts abgesaugt werden.

Gemäß einer bevorzugten Ausführungsform besitzt die Batterie-Verarbeitungsanlage einen Kondensator zum Kondensieren von aus dem Trockner abgesaugtem gasförmigem Elektrolyten, wobei in Materialflussrichtung zwischen der Trockenvorrichtung und dem Kondensator und/oder der zumindest einen Pumpe ein Partikelabscheider angeordnet ist.

Vorzugsweise besitzt die Batterie-Verarbeitungsanlage eine gasdichte und/oder staubdichte Fördervorrichtung, die die Zerkleinerungsvorrichtung und die Trockenvorrichtung miteinander verbindet.

Vorzugsweise besitzt die Batterie-Verarbeitungsanlage eine Schleuse, die vor der Zerkleinerungseinheit zum Zuführen der Batterien angeordnet ist, und/oder einen Partikelabscheider, der in Materialflussrichtung zwischen der Trockenvorrichtung und dem Kondensator angeordnet ist.

Vorzugsweise umfasst die Trockenvorrichtung eine Heizung, welche die Wärme vorzugsweise aus der Wärmeabfuhr der Vakuumpumpen und/oder des Kondensators bezieht.

Im Folgenden wird die Erfindung anhand der beigefügten Zeichnungen näher erläutert. Dabei zeigt
- Figur 1: ein Ablaufdiagramm eines erfindungsgemäßen Verfahrens,
- Figur 2: einen Querschnitt durch eine erfindungsgemäße Batterie-Verarbeitungsanlage und
- Figur 3: einen Querschnitt durch weitere, optionale Bestandteile einer erfindungsgemäßen Batterie-Verarbeitungsanlage.
- Figur 4: zeigt ein Ablaufdiagramm eines erfindungsgemäßen Verfahrens gemäß einer zweiten Ausführungsform.

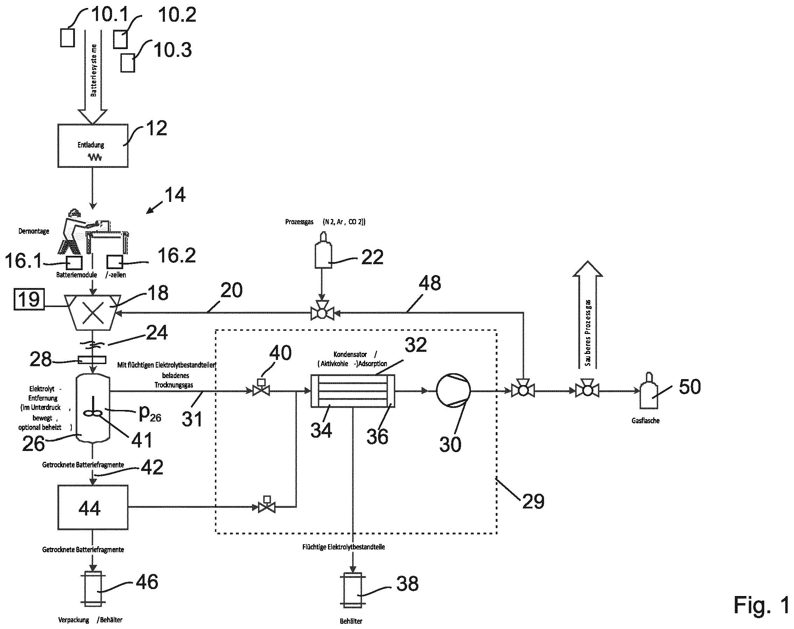

Figur 1 zeigt das Ablaufdiagramm eines erfindungsgemäßen Verfahrens. Zunächst werden Batterien 10.1, 10.2, ..., insbesondere Batteriesysteme bestehend aus mehreren Batteriemodulen oder Batteriestacks, welche wiederum aus mehreren Batteriezellen bestehen, in einer Entladeeinheit 12 entladen. Danach folgt an einer Demontagestation 14 die Demontage der Batterien 10, wenn diese erforderlich ist, weil die Batteriesysteme ansonsten aus geometrischen oder gravimetrischen Gründen nicht in die Zerkleinerungseinheit befördert werden können. Dazu werden die Batteriesysteme geöffnet und soweit demontiert, dass die Module/Stacks einzeln entfernt werden können. Gegebenenfalls können auch die Zellen von der Ansteuerelektronik getrennt werden. Die entstehenden Untereinheiten (Module/Stacks) und/oder Zellen 16.1, 16.2, ... werden einer Zerkleinerungseinheit 18 zugeführt, die beispielsweise eine Rotorschere mit einem Rotor und einen Zerkleinerer mit Statoren oder mehreren Rotoren, oder eine Schneidmühle mit einem Rotor und mehreren Rotoren umfasst.

Die Zerkleinerungseinheit 18 zerkleinert die Batterien 10 unter Schutzgas 20, das beispielsweise einer Schutzgasflasche entnommen wird. Alternativ oder zusätzlich kann flüssiger Stickstoff aus einer Flüssigstickstoffquelle 19 zugedüst werden. Bei dem Schutzgas kann es sich beispielsweise um Stickstoff, ein Edelgas, Kohlendioxid, Lachgas oder ein sonstiges, vorzugweise nicht giftiges Gas handeln.

Beim Zerkleinern entsteht Zerkleinerungsgut 24, das einer Inaktivierungsvorrichtung in Form einer Trockenvorrichtung 26 zugeführt wird. Zwischen der Zerkleinerungseinheit 18 und der Trockenvorrichtung 26 ist eine Schleuse 28 angeordnet, die soweit gasdicht ist, dass die Druckvorrichtung 26 in guter Näherung von der Zerkleinerungseinheit 18 gasdicht getrennt ist.

Die Trockenvorrichtung 26 ist mit einer Vakuumanlage 29 verbunden, die eine Vakuumpumpe 30 aufweist und ein Vakuum erzeugt. In der Trockenvorrichtung 26 herrscht ein Druck p₂₆ von p₂₆ ≈ 100 hPa, zeitweise unter 50 hPa. Es sei darauf hingewiesen, dass im Rahmen der vorliegenden Beschreibung unter einer Vakuumpumpe insbesondere ganz allgemein eine Vorrichtung verstanden wird, die ein Vakuum erzeugt. Es ist dabei möglich und bevorzugt, nicht aber notwendig, dass die Vakuumpumpe gleichzeitig als Verdichter wirkt, so dass von ihr Gas unter einem Druck abgegeben wird, der größer ist als der Umgebungsdruck.

In dem in Figur 1 gezeigten Fall handelt es sich bei der Vakuumpumpe um einen Verdichter, der Gas 31, das in der Trockenvorrichtung 26 vorliegt, ansaugt und verdichtet. Alternativ oder zusätzlich kann die Vakuumanlage 29 eine Strahlpumpe aufweisen, bei der ein Strahlmedium in Form einer Flüssigkeit mit hoher Geschwindigkeit durch Venturi-Düse geleitet wird. Das Strahlmedium ist alkalisch und hat einen pH-Wert von zumindest pH 13 und ist beispielsweise eine 10%ige Kaliumhydroxidlösung.

Die Vakuumanlage 29 umfasst eine Gasreinigungsvorrichtung 32, die zwischen der Trockenvorrichtung 26 und der Vakuumpumpe 30 angeordnet ist und die im vorliegenden Fall einen Kondensator 34 und/oder einen Aktivkohlefilter 36 umfasst. Der Kondensator wird bei einer Temperatur von -10 °C betrieben, so dass Kohlensäuredimethylester und Kohlensäureethylmethylester kondensieren und in einen Kondensatbehälter 38 abgegeben werden können. Zudem wird etwaig vorhandenes Wasser ausgefroren. Ein Steuerventil 40 ist ausgebildet zum Öffnen, wenn der Druck p₂₆ zu groß wird und zum Zufahren, wenn Pumpenkreislauf und Trocknungsbehälter entkoppelt werden sollen.

Vorzugsweise ist das Trocknungsgut während der Trocknung bewegt. Dies kann beispielsweise durch Rühren mit einem Rührwerk 41, wie einem Ankerrührer oder einem Stabrührer mit senkrecht zur Rührwelle angebrachten Stäben passieren. Alternativ durch einen bewegten Trocknungsbehälter.

Durch das Trocknen des Zerkleinerungsguts entsteht inaktiviertes Zerkleinerungsgut 42, das einer Abfüllvorrichtung 44 zugeführt wird. Dort wird das inaktivierte Zerkleinerungsgut 42 unter Vakuum und/oder unter Schutzgas in einen Transportbehälter 46 abgefüllt. Der Transportbehälter 46 ist vorzugsweise gasdicht. Es ist möglich, nicht aber notwendig, dass der Transportbehälter 46 vor dem Abtransport mit Inertgas aufgefüllt wird, so dass er unter Normaldruck steht. Alternativ ist es auch möglich, dass der Transportbehälter unter Vakuum verschlossen und transportiert wird. Es ist möglich, dass alternativ zum Transportbehälter eine vakuumverschweißte Folie, beispielsweise eine Aluminiumverbundfolie, gewählt wird.

Über eine Spülleitung 48 wird der Zerkleinerungseinheit 18 Schutzgas 20 von der Vakuumpumpe 30 zugeführt. Arbeitet die Vakuumpumpe 30 wie im vorliegenden Fall, der eine bevorzugte Ausführungsform darstellt, zudem als Kompressor, kann das Schutzgas auf eine Druckgasflasche 50 gezogen werden. Alternativ oder zusätzlich kann das Schutzgas 20, gegebenenfalls nach zusätzlicher Reinigung, in die Umgebung abgegeben werden.

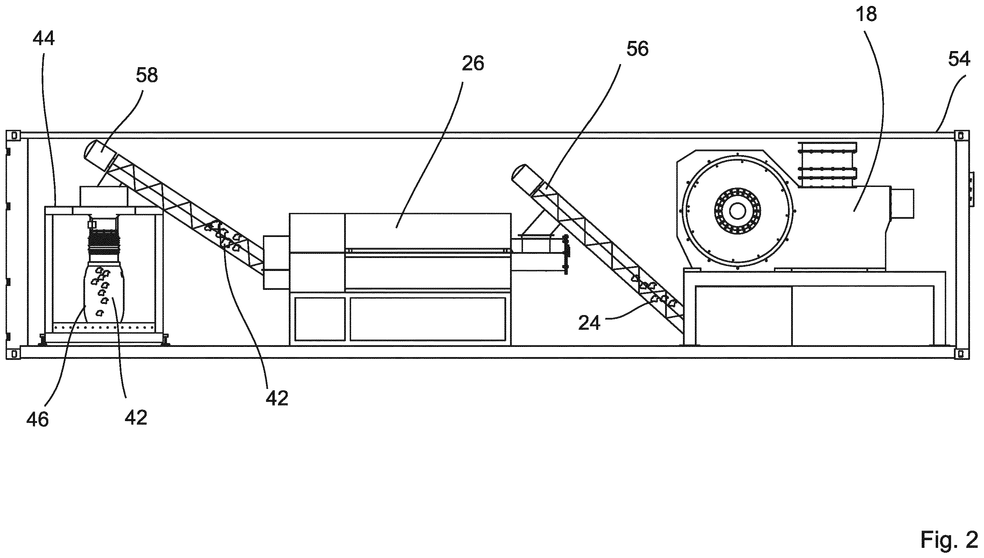

Figur 2 zeigt schematisch einen Querschnitt durch eine erfindungsgemäße Batterie-Verarbeitungsanlage 52 (vgl. Figur 1), die einen Standard-Container 54 aufweist, in dem die Zerkleinerungseinheit 18, die Trockenvorrichtung 26 und die Abfüllvorrichtung 44 angeordnet sind. Hinter der Zerkleinerungseinheit 18 ist ein erster gasdichter Förderer 56 angeordnet, der beispielsweise eine Förderschnecken oder einen Rohrkettenförderer umfasst. Der erste Förderer 56 fördert das Zerkleinerungsgut 24 zur Trockenvorrichtung 26, die mit der in Figur 2 nicht sichtbaren Vakuum-Erzeugungsvorrichtung verbunden ist. In Materialstromrichtung hinter der Trockenvorrichtung 26 ist ein zweiter Förderer 58 angeordnet, der vorzugsweise ebenfalls gasdicht ausgebildet ist und eine Förderschnecke oder einen Rohrkettenförderer enthalten kann. Der zweite Förderer fördert das inaktivierte Zerkleinerungsgut 42 zur Abfüllvorrichtung 44.

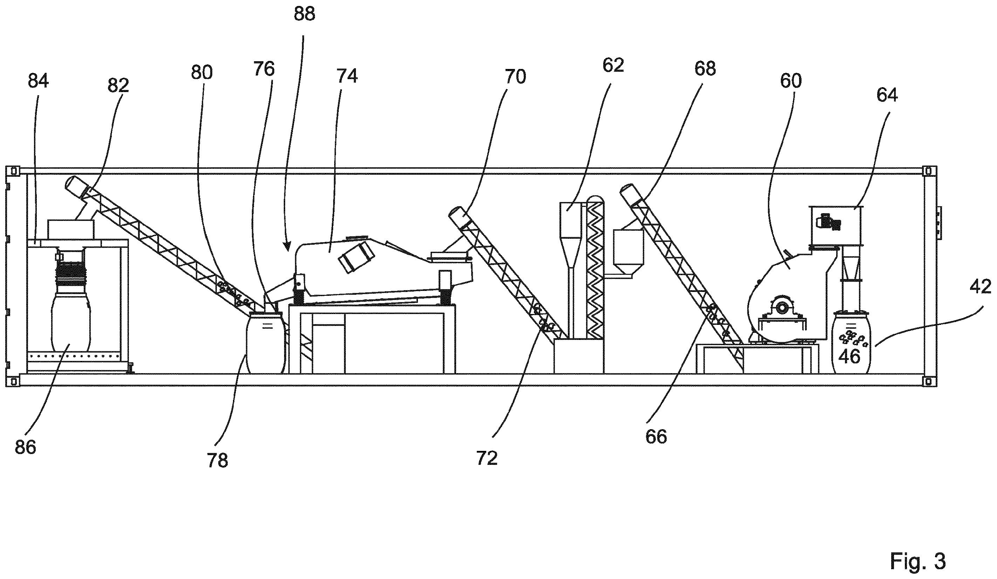

Figur 3 zeigt optionale, in der vorliegenden Ausführungsform vorhandene Einheiten der erfindungsgemäßen Batterie-Verarbeitungsanlage 52 (vgl. Figur 1), die einen Aufschlusszerkleinerer 60 sowie einen Sichter 62 umfasst. Der Aufschlusszerkleinerer 60 enthält eine Transportbehälter-Entleervorrichtung 64, mittels der aus dem Transportbehälter 46 inaktiviertes Zerkleinerungsgut 42 entnommen werden kann. Der Aufschlusszerkleinerer 60 erzeugt Aufschlussmaterial 66, das dem Sichter 62 zugeführt wird. Es kann sich bei dem Sichter beispielsweise um einen Zickzack-Sichter handeln.

Vorzugsweise umfasst die Batterie-Verarbeitungsanlage 52 einen Zerkleinerer, der vorzugsweise im Materialfluss vor der Klassiervorrichtung 74 steht und ein schnell laufendes Zerkleinerungswerkzeug enthält, wobei eine Rotorumfangsgeschwindigkeit größer ist als 1 m/s, vorzugsweise größer als 10 m/s. Dieser Zerkleinerer zerkleinert das Zerkleinerungsmaterial und beansprucht es mechanisch so, dass sich die elektrochemisch aktive Beschichtung mindestens teilweise vom Träger löst. Das Vorhandensein eines solchen Zerkleinerer ist ein allgemeines bevorzugtes Merkmal einer erfindungsgemäßen Batterie-Verarbeitungsanlage.

Im Sichter entstehen eine Leichtfraktion mit Separatorfolie und feinem Beschichtungsmaterial und eine Schwergutfraktion mit Trägerfolien (Aluminium- und Kupfer) mit größerem leicht anhaftender Beschichtung. Beide Fraktionen werden auf jeweils ein Sieb zur weiteren Trennung in Beschichtung und Separatorfolie beziehungsweise Beschichtung und Metallfolien gegeben. Die entstehenden Fraktionen werden getrennt weiter verarbeitet.

Das Aufschlussmaterial 66 wird dem Sichter 62 mittels einem dritten Förderer 68 zugeführt. Ein vierter Förderer 70 führt gesichtetes Material 72, insbesondere das Material der Leichtfraktion und das Material der Schwerfraktion, das den Sichter 62 verlässt, einer oder zwei Klassiervorrichtungen 74 zu. Die Klassiervorrichtung 74 umfasst vorzugsweise ein Luftstrahlsieb, das gleichzeitig als Trennvorrichtung im Falle der Schwerfraktion zum Trennen des Aktivmaterials von dem Träger fungiert. Im Falle der Leichtfraktion wird das Aktivmaterial vom Separator getrennt. Durch das Trennen entsteht eine Aktivmaterialfraktion 76, die in ein Transportbehältnis 78 abgefüllt wird.

Es entsteht zudem eine Trägerfraktion (Schwergut) 80 und eine Separatorfraktion (Leichtgut), die in der vorliegenden Ausführungsform mit einem fünften Förderer 82 einer Abfülleinheit 84 zugeführt wird, die die Trägerfraktion 80 in einen Behälter 86 füllt. Die Abfülleinheit 84 ist zusammen mit einer zweiten Abfülleinheit 88 Teil einer zweiten Abfüllvorrichtung.

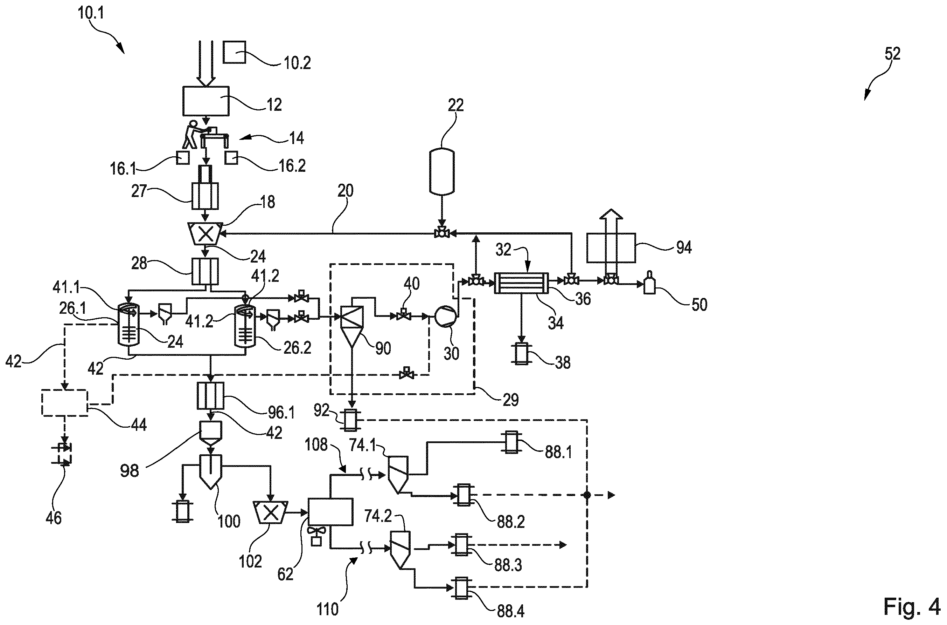

Figur 4 zeigt ein Flussdiagramm einer zweiten erfindungsgemäßen Batterie-Verarbeitungsanlage 52, die zwei Trockenvorrichtungen 26.1, 26.2 aufweist. Jede der Trockenvorrichtungen 26.1, 26.2 besitzt jeweils ein Rührwerk 41.1 bzw. 41.2. In Materialflussrichtung vor der Zerkleinerungseinheit 18 befindet sich die Schleuse 27, die im vorliegenden Fall als Dosierschleuse ausgebildet ist und mit welcher die Zerkleinerungseinheit 18 befüllt werden kann, ohne dass die Gasatmosphäre im Zerkleinerer mit Umgebungsluft vermischt wird. In Materialflussrichtung hinter der Zerkleinerungseinheit 18 befindet sich die Schleuse 28, die im vorliegenden Fall als Dosierschleuse ausgebildet ist und mittels der die Trockenvorrichtungen 26.1, 26.2 einzeln oder simultan beschickt werden können.

Jedes der Rührwerke 41.1, 41.2 besitzt eine Leistung von zumindest 4 kW, im vorliegenden Fall 5 kW pro Kubikmeter Trocknervolumen. Die eingebrachte mechanische Energie wird auf das in der jeweiligen Trockenvorrichtung 26.1, 26.2 enthaltene Zerkleinerungsgut 24 übertragen. Ein Teil der mechanischen Energie führt zur Trennung von Bestandteilen des Zerkleinerungsguts, beispielsweise zu einer Trennung von Beschichtungsmaterial von der Trägerfolie. Der überwiegende Teil der mechanischen Leistung wird jedoch in Wärmeenergie umgewandelt. Diese Wärmeenergie wird von dem verdampfenden Elektrolyten, der noch Bestandteil des Zerkleinerungsguts 24 ist, aufgenommen.

Die in den Trockenvorrichtungen 26.i (i = 1, 2) entstehenden Gase werden zunächst mittels einer Partikel-Entfernvorrichtung 90 von mitgerissenen Partikeln gereinigt. Die Partikel werden in einem Behälter 92 aufgefangen oder direkt weiterverarbeitet. Bei der Partikelentfernvorrichtung 90 kann es sich beispielweise um einen Filter und/oder einen Zyklon handeln.

In Strömungsrichtung hinter der Partikelentfernvorrichtung 90 ist die Vakuumpumpe 30 angeordnet. Günstig ist es, wenn in Gas-Strömungsrichtung hinter der Vakuumpumpe 30 oder parallel dazu mindestens eine zweite Pumpe anderer Bauart angeordnet ist.

Hinter der Vakuumpumpe 30 ist der Kondensator 34 angeordnet, in dem ein Druck p₃₄ herrscht. Der Druck p₃₄ entspricht im Wesentlichen dem Umgebungsdruck, das heißt, dass er beispielsweise um höchstens 100 hPa vom Umgebungsdruck abweicht. Da der Druck p₃₄ deutlich größer ist als der Druck p₂₆ in den Trockenvorrichtungen 26.1, 26.2, kondensieren insbesondere die Carbonsäureester, insbesondere Dimethylcarbonat, Propylencarbonat, Diethylcarbonast, Ethylencarbonat und Ethylmetylcarbonat, aus. Die entstehende Kondensationswärme wird durch Kühlung abgeführt. Dabei ist es möglich, dass der Kondensator auf eine Temperatur T₃₄ gekühlt wird, die sich um weniger als 20 Kelvin von der Umgebungstemperatur T_{Umg} unterscheidet. Das hat den Vorteil, dass der Energieaufwand für das Trocknen des Zerkleinerungsgutes 24 vergleichsweise gering ist und gleichzeitig viel Elektrolyt zurückgewonnen werden kann.

In Materialflussrichtung hinter dem Kondensator 34 kann ein Aktivkohlefilter 36 angeordnet sein, das ist aber nicht notwendig. Es ist zudem möglich, dass in Strömungsrichtung hinter dem Kondensator 34 eine Oxidationsvorrichtung 94 angeordnet ist, mittels der verbleibenden Reste oxidierbaren Materials, insbesondere von organischen Bestandteilen des Elektrolyten, katalytisch oder thermisch oxidiert werden, sodass das aus der Oxidationsvorrichtung 94 austretende Gas gefahrlos in die Umgebung abgegeben werden kann.

Es ist möglich, dass die Batterieverarbeitungsanlage 52 eine Abfüllvorrichtung 44 aufweist, mittels der das getrocknete Zerkleinerungsgut 24 in Form des inaktiven Zerkleinerungsgutes 42 in einen Transportbehälter 46 abgefüllt werden kann. Es ist aber auch möglich, dass die Batterieverarbeitungsanlage 52 keine solche Abfüllvorrichtung 44 aufweist.

Die Trockenvorrichtung 26.1, 26.2 (es ist auch möglich, dass die Batterieverarbeitungsanlage in dieser Ausführungsform lediglich eine Trockenvorrichtung 26 aufweist) besitzen jeweils eine Ausgangs-Schleuse 96.1, 96.2 in Form einer Dosier- und Umlenkschleuse. Das inaktive Zerkleinerungsgut 42 wird beispielsweise in einem Silo 98 zwischengelagert oder direkt einem Schwergutabscheider 100 zugeführt. Der Schwergutabscheider 100 ist ausgebildet zum Abscheiden von Material mit einer Dichte von zumindest 2,6 Gramm pro Kubikzentimeter, insbesondere Aluminium- und/oder Eisenbestandteile.

Nachfolgend wird das verbleibende Material in einem Zerkleinerer 102 weiter zerkleinert und danach in einem Sichter 62 klassiert in Leichtgut 108 (Separator und Beschichtungsmaterial) und in Schwergut 110 (Trägerfolien und Beschichtungsmaterial). Beide Fraktionen werden gesiebt 74.1, 74.2. Es entstehen die wiederverwertbaren Aluminium- und Kupferfolien in Behälter 88.3, eine Separatorfraktion in Behälter 88.1, sowie reines Beschichtungsmaterial in Behälter 88.4 und 88.2, welches auf Grund seiner großen Reinheit in folgenden metallurgischen Prozessschritten weiterverarbeitet werden kann.

**Bezugsleistenliste**

| | | | |
|---|---|---|---|
| 10 | Batterie | 60 | Aufschlusszerkleinerer |
| 12 | Entladeeinheit | 62 | Sichter |
| 14 | Demotagesstation | 64 | Transportbehälter-Entleervorrichtung |
| 16 | Zelle | | |
| 18 | Zerkleinerungseinheit | 66 | Aufschlussmaterial |
| 19 | Flüssigstickstoffquelle | 68 | dritter Förderer |
| 20 | Schutzgas | 70 | vierter Förderer |
| 22 | Schutzgasflasche | 72 | gesichtetes Material |
| 24 | Zerkleinerungsgut | 74 | Klassiervorrichtung |
| 26 | Trockenvorrichtung | 76 | Aktivmaterialfraktion |
| 27 | Schleuse vor Zerkleinerer | 78 | Transportbehältnis |
| 28 | Schleuse | | |
| 29 | Vakuumanlage | 80 | Trägerfraktion |
| | | 82 | fünfter Förderer |
| 30 | Vakuumpumpe | 84 | Abfülleinheit |
| 31 | Gas | 86 | Behälter |
| 32 | Gasreinigungsvorrichtung | 88 | weitere Abfülleinheit |
| 34 | Kondensator | | |
| 36 | Aktivkohlefilter | 90 | Partikelentfernvorrichtung |
| 38 | Kondensatbehälter | 92 | Behälter |
| | | 94 | Oxidationsvorrichtung |
| 40 | Steuerventil | 96 | Ausgangsschleuse |
| 41 | Rührwerk | 98 | Silo |
| 42 | inaktives Zerkleinerungsgut | | |
| 44 | Abfüllvorrichtung | 100 | Schwergutabscheider |
| 46 | Transportbehälter | 102 | Zerkleinerer |
| 48 | Spülleitung | 108 | Leichtgut |
| | | 110 | Schwergut |
| 50 | Druckgasflasche | | |
| 52 | Batterie-Verarbeitungsanlage | p | Druck |
| 54 | Standard-Container | | |
| 56 | erster Förderer | | |
| 58 | zweiter Förderer | | |

## Patentansprüche

1. Verfahren zum Behandeln gebrauchter Lithium-Batterien (10) mit den Schritten:
(a) Zerkleinern der Batterien (10), sodass Zerkleinerungsgut (24) erhalten wird, und
(b) Inaktivieren des Zerkleinerungsguts (24) durch Trocknen, sodass ein inaktiviertes Zerkleinerungsgut (42) erhalten wird,
(c) wobei das Trocknen bei einem Druck von höchstens 300 hPa und höchstens 80 °C erfolgt und das Zerkleinerungsgut (24) so lange getrocknet wird, bis sich keine entzündliche oder explosive Gasphase über dem Zerkleinerungsgut bildet
(d) wobei an eine Zerkleinerungsvorrichtung, in der die Batterien zerkleinert werden, ein Vakuum mit einem Druck von höchstens 300 hPa angelegt wird,
(e) zum Inaktivieren kein zusätzliches Material hinzugegeben wird und
(f) das inaktivierte Zerkleinerungsgut (42) nach dem Trocknen nicht in einen Transportbehälter abgefüllt und/oder direkt weiterverarbeitet wird.

2. Verfahren nach Anspruch 1, **dadurch gekennzeichnet, dass** beim Trocknen das Entstehen von Fluorwasserstoff verhindert wird.

3. Verfahren nach einem der vorstehenden Ansprüche, **gekennzeichnet durch** den Schritt: Kondensieren der beim Trocknen der entstandenen Gase bei Umgebungsdruck und/oder bei einer Temperatur von mehr als 0°C und höchstens 50°C.

4. Verfahren nach einem der vorstehenden Ansprüche, **dadurch gekennzeichnet, dass** das Zerkleinerungsgut (42) nach dem Trocknen mittels einem kontinuierlich oder diskontinuierlich förderndem Förderer zu einer Trennvorrichtung transportiert wird.

5. Verfahren nach einem der vorstehenden Ansprüche, **dadurch gekennzeichnet, dass**
das beim Zerkleinerungsgut (42) mittels einer Separiervorrichtung Aktivmaterial vom Träger separiert wird, sodass, sodass eine Aktivmaterialfraktion und eine Trägerfraktion entstehen.

6. Verfahren nach einem der vorstehenden Ansprüche, **dadurch gekennzeichnet, dass**
- das Trocknen während zumindest 50% der Trockenzeit bei einem Druck von höchstens 30 hPa erfolgt und /oder
- ein Minimaldruck beim Trocknen höchstens 50 hPa beträgt.

7. Verfahren nach einem der vorstehenden Ansprüche, **dadurch gekennzeichnet, dass**
- beim Trocknen entstehende Gase abgesaugt werden und/oder
- das Bewegen mittels des Rührwerks so durchgeführt wird, dass zumindest 50 Gew.-% des Beschichtungsmaterials des Zerkleinerungsguts (42) abgesaugt werden.

8. Batterie-Verarbeitungsanlage zum Behandeln von gebrauchten Lithium-Batterien (10) mit:
(a) einer Zerkleinerungseinheit (18) zum Zerkleinern der Batterien (10), sodass Zerkleinerungsgut (24) erhalten wird, und
(b) einer Inaktivierungsvorrichtung zum Inaktivieren des Zerkleinerungsguts (24),
**dadurch gekennzeichnet, dass**
(c) die Batterie-Verarbeitungsanlage ausgebildet ist zum Inaktivieren des Zerkleinerungsguts (24) durch Trocknen,
(d) eine Vakuumanlage mit der Trockenvorrichtung (26) zum Erzeugen eines Vakuums in der Trockenvorrichtung (26) von zumindest 300 hPa verbunden ist und ausgebildet ist zum Trocknen des Zerkleinerungsguts (24) so lange, bis ein Elektrolytgehalt im Zerkleinerungsgut (24) so klein ist, dass sich keine entzündliche oder explosive Gasphase über dem Zerkleinerungsgut bildet,
(e) die Trockenvorrichtung (26) zum Trocknen bei einer Temperatur von höchstens 80 °C ausgebildet ist und
(f) die Zerkleinerungseinheit (18) in der Trockenvorrichtung angeordnet ist.

9. Batterie-Verarbeitungsanlage nach Anspruch 8, **gekennzeichnet durch** einen Kondensator zum Kondensieren von aus dem Trockner abgesaugtem gasförmigem Elektrolyten,
wobei in Materialflussrichtung zwischen der Trockenvorrichtung und dem Kondensator und/oder der zumindest einen Pumpe ein Partikelabscheider angeordnet ist.

10. Batterie-Verarbeitungsanlage nach einem der Ansprüche 8 bis 9, **dadurch gekennzeichnet, dass** sie ausgebildet ist zum Inaktivieren des Zerkleinerungsguts (24) ohne Zugabe von zusätzlichem Material.

11. Batterie-Verarbeitungsanlage nach einem der Ansprüche 8 bis 10, **gekennzeichnet durch**
- eine Schleuse, die vor der Zerkleinerungseinheit (18) zum Zuführen der Batterien (10) angeordnet ist, und/oder
- einen Partikelabscheider, der in Materialflussrichtung zwischen der Trockenvorrichtung und dem Kondensator angeordnet ist.

12. Batterie-Verarbeitungsanlage nach einem der Ansprüche 8 bis 11, **dadurch gekennzeichnet, dass** die Trockenvorrichtung eine Heizung umfasst, welche die Wärme vorzugsweise aus der Wärmeabfuhr der Vakuumpumpen und/oder des Kondensators bezieht.

13. Batterie-Verarbeitungsanlage nach einem der Ansprüche 8 bis 12, **dadurch gekennzeichnet, dass** die Trockenvorrichtung
zumindest eine trockenlaufende Vakuumpumpe aufweist.

14. Batterie-Verarbeitungsanlage nach Anspruch 13, **dadurch gekennzeichnet, dass** die Trockenvorrichtung zwei Vakuumpumpen aufweist, die sich in ihrem Volumenstrom bei 400 hPa und ihrem maximal erreichbaren Minimaldruck unterscheiden.

15. Batterie-Verarbeitungsanlage nach einem der Ansprüche 8 bis 14, **dadurch gekennzeichnet, dass** die Zerkleinerungseinheit ein Bodensieb zum Begrenzen der maximalen Größe des Zerkleinerungsguts aufweist.

## Claims

1. A method for treating used lithium batteries (10) comprising the steps:
(a) comminuting the batteries (10), thereby obtaining comminuted material (24), and
(b) inactivating the comminuted material (24) by drying, thereby obtaining inactivated comminuted material (42),
(c) wherein drying is done at a pressure of at most 300 hPa and at most 80 °C, and the comminuted material (24) is dried until no flammable or explosive gas phase forms above the comminuted material,
(d) wherein a vacuum with a pressure of at most 300 hPa is applied to a comminution device,
(e) no additional material is added for the purpose of inactivation and
(f) the inactivated comminuted material (42) is not filled into a transport container and/or said inactivated comminuted material is immediately further processed after the drying process.

2. The method according to claim 1, **characterised in that** the development of hydrogen fluoride is prevented during drying.

3. The method according to one of the preceding claims, **characterised by** the step: condensing the gases resulting from the drying process at an ambient pressure and/or at a temperature of more than 0°C and at most 50°C.

4. The method according to one of the preceding claims, **characterised in that** the comminuted material (42) is transported after drying to a separating device by means of a continuously or discontinuously feeding conveyor.

5. The method according to one of the preceding claims, **characterised in that** the active material is separated from the carrier in the comminuted material (42) by means of a separating device, thus obtaining an active material fraction and a carrier fraction.

6. The method according to one of the preceding claims, **characterised in that**
- drying is carried out during at least 50% of the drying time at a pressure of at most 30 hPa and/or
- a minimum pressure during drying is at most 50 hPa.

7. The method according to one of the preceding claims, **characterised in that**
- gases that develop during the drying process are sucked away and/or
- the movement using the agitator is conducted such that at least 50% by weight of the coating material of the comminuted material (42) is sucked away.

8. A battery processing system for treating used lithium batteries (10) with:
(a) a comminution unit (18) for comminuting the batteries (10), thereby obtaining comminuted material (24), and
(b) an inactivation device for inactivating the comminuted material (24),
**characterised in that**
(c) the battery processing system is designed to inactivate the comminuted material (24) by way of drying,
(d) a vacuum system is connected to the drying device (26) for creating a vacuum of at least 300 hPa in the drying device (26) and designed for drying the comminuted material (24) until an electrolyte content in the comminuted material (24) is so low that no flammable or explosive gas phase forms above the comminuted material,
(e) the drying device (26) is designed to drying at a temperature of at most 80 °C and
(f) the comminution unit (18) is arranged in the drying device.

9. The battery processing system according to claim 8, **characterised by** a condenser for condensing gaseous electrolytes sucked out of the dryer, wherein a particle separator is arranged between the drying device and the condenser and/or the at least one pump in the direction of material flow.

10. The battery processing system according to one of the claims 8 to 9, **characterised in that** it is designed to inactivate the comminuted material (24) without adding additional material.

11. The battery processing system according to one of the claims 8 to 10, **characterised by**
- an airlock arranged upstream of the comminution unit (18) for feeding the batteries (10) and/or
- a particle separator arranged between the drying device and the condenser in the direction of material flow.

12. The battery processing device according to one of the claims 8 to 11, **characterised in that** the drying device comprises a heater which preferably draws the heat from the heat dissipation of the vacuum pumps and/or the condenser.

13. The battery processing device according to one of the claims 8 to 12, **characterised in that** the drying device
comprises at least one dry running vacuum pump.

14. The battery processing device according to claim 13, **characterised in that** the drying device comprises two vacuum pumps that differ in their volume flow at 400 hPa and their maximum possible minimum pressure.

15. The battery processing device according to one of the claims 8 to 14, **characterised in that** the comminution unit comprises a bottom sieve for restricting the maximum size of the communited material.

## Revendications

1. Procédé de traitement de batteries au lithium usagées (10), comprenant les étapes suivantes consistant à :
(a) broyer les batteries (10) de manière à obtenir un matériau broyé (24), et
(b) inactiver le matériau broyé (24) par séchage de manière à obtenir un matériau broyé inactivé (42),
(c) dans lequel le séchage est effectué à une pression de 300 hPa au maximum et à une température de 80 °C au maximum, et le matériau broyé (24) est séché jusqu'à ce qu'aucune phase gazeuse inflammable ou explosive ne se forme au-dessus du matériau broyé,
(d) un vide avec une pression de 300 hPa au maximum est appliqué à un dispositif de broyage dans lequel les batteries sont broyées,
(e) aucun matériau supplémentaire n'est ajouté pour l'inactivation, et
(f) après le séchage, le matériau broyé inactivé (42) n'est pas versé dans un récipient de transport et/ou transformé davantage directement.

2. Procédé selon la revendication 1, **caractérisé en ce que** lors du séchage, on empêche la formation de fluorure d'hydrogène.

3. Procédé selon l'une des revendications précédentes, **caractérisé par** l'étape consistant à : condenser les gaz, formés lors du séchage, à la pression ambiante et/ou à une température de plus de 0 °C et de 50 °C au maximum.

4. Procédé selon l'une des revendications précédentes, **caractérisé en ce qu'**après séchage, le matériau broyé (42) est transporté vers un dispositif de séparation au moyen d'un convoyeur à alimentation continue ou discontinue.

5. Procédé selon l'une des revendications précédentes, **caractérisé en ce que** dans le matériau broyé (42), la matière active est séparée du support au moyen d'un dispositif de séparation, de sorte qu'il en résulte une fraction de matière active et une fraction de support.

6. Procédé selon l'une des revendications précédentes, **caractérisé en ce que**
- le séchage s'effectue pendant au moins 50 % du temps de séchage à une pression de 30 hPa au maximum, et/ou
- lors du séchage, une pression minimale est de 50 hPa au maximum.

7. Procédé selon l'une des revendications précédentes, **caractérisé en ce que**
- les gaz formés lors du séchage sont aspirés, et/ou
- l'agitation au moyen de l'agitateur est effectuée de telle sorte qu'au moins 50 % en poids du matériau de revêtement du matériau broyé (42) sont aspirés.

8. Installation de transformation de batteries pour traiter des batteries au lithium usagées (10), comprenant :
(a) une unité de broyage (18) pour broyer les batteries (10) de manière à obtenir un matériau broyé (24), et
(b) un dispositif d'inactivation pour inactiver le matériau broyé (24),
**caractérisée en ce que**
(c) l'installation de transformation de batteries est conçue pour inactiver le matériau broyé (24) par séchage,
(d) une installation à vide est reliée au dispositif de séchage (26) pour générer un vide dans le dispositif de séchage (26) d'au moins 300 hPa et est conçue pour sécher le matériau broyé (24) jusqu'à ce qu'une teneur en électrolyte dans le matériau broyé (24) soit si faible qu'aucune phase gazeuse inflammable ou explosive ne se forme au-dessus du matériau broyé,
(e) le dispositif de séchage (26) est conçu pour un séchage à une température de 80 °C au maximum, et
(f) l'unité de broyage (18) est placée dans le dispositif de séchage.

9. Installation de transformation de batteries selon la revendication 8, **caractérisée par**
un condenseur pour condenser l'électrolyte gazeux aspiré hors du séchoir,
un séparateur de particules étant disposé dans le sens du flux de matériau entre le dispositif de séchage et le condenseur et/ou la au moins une pompe.

10. Installation de transformation de batteries selon l'une des revendications 8 à 9, **caractérisée en ce qu'**elle est conçue inactiver le matériau broyé (24) sans ajouter un matériau supplémentaire.

11. Installation de transformation de batteries selon l'une des revendications 8 à 10, **caractérisée par**
- un sas disposé en amont de l'unité de broyage (18) pour amener les batteries (10), et/ou
- un séparateur de particules disposé entre le dispositif de séchage et le condenseur dans le sens du flux de matériau.

12. Installation de transformation de batteries selon l'une des revendications 8 à 11, **caractérisée en ce que** le dispositif de séchage comprend un chauffage qui tire la chaleur de préférence de l'évacuation de chaleur des pompes à vide et/ou du condenseur.

13. Installation de transformation de batteries selon l'une des revendications 8 à 12, **caractérisée en ce que** le dispositif de séchage comprend au moins une pompe à vide fonctionnant à sec.

14. Installation de transformation de batteries selon la revendication 13, **caractérisée en ce que** le dispositif de séchage comporte deux pompes à vide qui se distinguent de par leur débit volumique à 400 hPa et de par leur pression minimale à atteindre au maximum.

15. Installation de transformation de batteries selon l'une des revendications 8 à 14, **caractérisée en ce que** l'unité de broyage comprend un tamis de fond pour limiter la taille maximale du matériau broyé.
